# EUROPEAN PATENT APPLICATION

(11) **EP 4 148 814 A1**
(43) Date of publication of application: **15.03.2023**
(21) Application number: 21805331.2
(22) Date of filing: 09.04.2021
(51) Int. Cl.: H01M 4/02, H01M 4/13

(54) **POLE, WINDING-TYPE BATTERY CELL, AND BATTERY**

(30) Priority: 09.05.2020 CN 202020758543 U
(71) Applicant: BYD Company Limited, Shenzhen, Guangdong 518118 (CN)
(72) Inventor: JIANG, Xinjun, Shenzhen, Guangdong 518118 (CN); ZHANG, Jian, Shenzhen, Guangdong 518118 (CN); LEI, Lei, Shenzhen, Guangdong 518118 (CN)
(74) Representative: DehnsGermany Partnerschaft von Patentanwälten
(86) International application number: PCT/CN2021/086146
(87) International publication number: WO 2021/227728

(57) **Abstract**

An electrode sheet, a wound battery core (J) and a battery (100) are provided. The electrode sheet includes a current collector (10) and a first active material layer (11) coated on a surface of the current collector. The first active material layer includes a main portion main portion (U) and a first buffer portion (V1) connected to each other. The main portion includes a first inner surface (N1) and an outer surface (W) opposite to each other. A vertical distance from the outer surface to the first inner surface is the first thickness (H1). The first buffer portion includes an inner wall surface (B) defining the first groove, a second inner surface (N2), and a buffer surface (S). A vertical distance from the intersection line where the buffer surface and the inner wall surface are connected to the second inner surface is the second thickness (H2). The second thickness is smaller than the first thickness. By arranging the buffer surface, the pressure on the first buffer portion is reduced in the rolling process, so as to reduce the extension of the current collector, and alleviate the wrinkling of the current collector.

## Description

### CROSS-REFERENCE TO RELATED APPLICATIONS

The present disclosure is proposed on the basis of and claims priority to Chinese Patent Application No. 202020758543.0 filed on May 9, 2020, the disclosure of which is incorporated herein by reference in its entirety.

### FIELD

The present disclosure relates to the field of batteries, and specifically to an electrode sheet, a wound battery core, and a battery.

### BACKGROUND

A battery electrode sheet includes a current collector and an active material coated on a surface of the current collector. The current collector is generally an aluminum foil or a copper foil. In the current production process of the battery electrode sheet, the electrode sheet needs to be rolled to obtain an electrode sheet that meets the design parameters. However, during the rolling process, the active material is compacted, and the active material will squeeze the foil, eventually leading to the extension of the foil. Since no extension occurs at the position where no active material layer is coated, ripples and even wrinkles in severe cases are formed in appearance at the edge of the foil due to different extensions at positions with or without the active material. Wrinkling of a groove in the electrode sheet will affect the welding strength of the tabs, causing poor welding or increasing the resistance of the battery, fast heat generation during the charge and discharge process of the battery, and accelerated attenuation of the cycle life. At positions where the groove meets the active material, the active material tends to fall off, causing foil exposure of the electrode sheet. At positions of foil exposure on the negative electrode sheet, lithium precipitation is more likely to occur, due to low polarization.

### SUMMARY

The present disclosure provides an electrode sheet, a wound battery core and a battery, to solve the problems of foil exposure of the battery electrode sheet, short cycle life of the battery core and fast heat generation of the battery caused by the wrinkling of the current collector during the rolling process of the electrode sheet.

To accomplish the objects of the present disclosure, the present disclosure provides the following technical solutions.

In a first aspect, the present disclosure provides an electrode sheet, which includes a current collector and an active material coated on a surface of the current collector. The first active material layer includes a main portion and a first buffer portion connected to each other. The main portion includes a first inner surface and an outer surface opposite to each other. The first inner surface is attached to the current collector, and the outer surface is parallel to the first inner surface. A vertical distance from the outer surface to the first inner surface is the first thickness, and the first thickness is defined in the range of 50 to 200 µm. The first buffer portion is provided with a first groove, configured to hold the tabs. The first buffer portion includes a second inner surface, a buffer surface and an inner wall surface defining the first groove. The second inner surface coincides with the first inner surface. One end of the buffer surface is connected to the outer surface, and another end of the buffer surface is connected to the inner wall surface. A vertical distance from the intersection line where the buffer surface and the inner wall surface are connected to the second inner surface is the second thickness. The second thickness is smaller than the first thickness, and the second thickness is defined in the range of 20 to 180 µm.

In an embodiment, the buffer surface includes any one of a curved surface, an inclined surface, a stepped surface, a curved surface and an inclined surface in combination, a curved surface and a stepped surface in combination, an inclined surface and a stepped surface in combination, and a curved surface, a stepped surface, and an inclined surface in combination.

In an embodiment, a vertical distance from any point on the buffer surface to the second inner surface is less than the first thickness.

In an embodiment, the inner wall surface of the first buffer portion includes a first wall surface, a second wall surface and a third wall surface. The first wall surface is opposite to the second wall surface, and the third wall surface connects the first wall surface and the second wall surface. The buffer surface is provided at a corresponding position of at least one of the first wall surface, the second wall surface and the third wall surface.

In an embodiment, the buffer portion and the main portion have an integral structure.

In an embodiment, the electrode sheet further includes a second active material layer, provided on another side of the current collector facing away from the first active material layer. The second active material layer is provided with a second buffer portion, and the second buffer portion is provided with a second groove. The structure of the second buffer portion is the same as the structure of the first buffer portion.

In an embodiment, the first buffer portion and the second buffer portion are arranged in alignment or offset with each other.

In an embodiment, the current collector includes opposing first and second sides. The first groove extends from the first side toward the second side; the second groove extends from the first side toward the second side, or the second groove extends from the second side toward the first side.

In a second aspect, the present disclosure further provides a wound battery core, which includes a separator and electrode sheets described in any one of the various embodiments according to the first aspect, wherein the separator is arranged between two electrode sheets.

In a third aspect, the present disclosure provides a battery, which includes a wound battery core as described in the second aspect.

By setting the buffer surface, the pressure on the first buffer portion is reduced in the rolling process, whereby the pressure transferred by the first buffer portion to the current collector is lowered, and the extension of the current collector decreases, thereby reducing or even eliminating the wrinkling of the current collector. The reduction of the wrinkling of the current collector reduces the risk of foil exposure caused by peeling off of the active material, thus improving the cycle life of the battery core, and slowing down the heat generation of the battery.

### BRIEF DESCRIPTION OF THE DRAWINGS

To describe the technical solutions of the implementations of the present disclosure or the existing technology more clearly, the following briefly introduces the accompanying drawings required for describing the implementations or the existing technology. Apparently, the accompanying drawings in the following description show only some implementations of the present disclosure, and a person of ordinary skill in the art may still derive other drawings from these accompanying drawings without creative efforts.
Fig. 1 is a schematic structural view of a battery according to an embodiment;
Fig. 2 is a schematic structural view of a wound battery core according to an embodiment;
Fig. 3 is a schematic front structural view of an electrode sheet according to an embodiment;
Fig. 4 is a schematic front structural view of an electrode sheet according to an embodiment;
Fig. 5 is a schematic front structural view of an electrode sheet according to an embodiment;
Fig. 6 is a schematic front structural view of an electrode sheet according to an embodiment;
Fig. 7 is a schematic front structural view of an electrode sheet according to an embodiment;
Fig. 8 is a schematic front structural view of an electrode sheet according to an embodiment;
Fig. 9 is a schematic front structural view of an electrode sheet according to an embodiment;
Fig. 10 is a schematic front structural view of an electrode sheet according to an embodiment;
Fig. 11 is a schematic front structural view of an electrode sheet according to an embodiment;
Fig. 12 is a schematic top structural view of an electrode sheet according to an embodiment;
Fig. 13 is a schematic front structural view of an electrode sheet according to an embodiment;
Fig. 14 is a schematic top structural view of an electrode sheet according to an embodiment;
Fig. 15 is a schematic top structural view of an electrode sheet according to an embodiment;
Fig. 16 is a schematic top structural view of an electrode sheet according to an embodiment;
Fig. 17 is a schematic top structural view of an electrode sheet according to an embodiment;
Fig. 18 is a schematic top structural view of an electrode sheet according to an embodiment;
Fig. 19 is a schematic top structural view of an electrode sheet according to an embodiment;
Fig. 20 is a schematic top structural view of an electrode sheet according to an embodiment;
Fig. 21 is a schematic front structural view of an electrode sheet according to an embodiment;
Fig. 22 is a schematic front structural view of an electrode sheet according to an embodiment;
Fig. 23 is a schematic top structural view of an electrode sheet according to an embodiment; and
Fig. 24 is a schematic structural view of a battery according to an embodiment.

### List of reference numerals:

100 battery, K battery housing, J wound battery core, G battery upper cover, T1 boss, T2 cylindrical boss, D electrolyte injection port, 3 separator, 1/2 electrode sheet, 10 current collector, 11 first active material layer, U main portion, N1 first inner surface, W outer surface, V1 first buffer portion, H1 first thickness, C1 first groove, N2 second inner surface, S buffer surface, B inner wall surface, H2 second thickness, Y roller, B1 first wall surface, B2 second wall surface, B3 third wall surface, 12 second active material layer, V2 second buffer portion, C2 second groove, 5 first side, 6 second side.

### DETAILED DESCRIPTION

The following clearly and completely describes the technical solutions in the implementations of the present disclosure with reference to the accompanying drawings in the implementations of the present disclosure. Apparently, the described embodiments are merely some but not all of the implementations of the present disclosure. All other implementations obtained by a person of ordinary skill in the art based on the implementations of the present disclosure without creative efforts shall fall within the protection scope of the present disclosure.

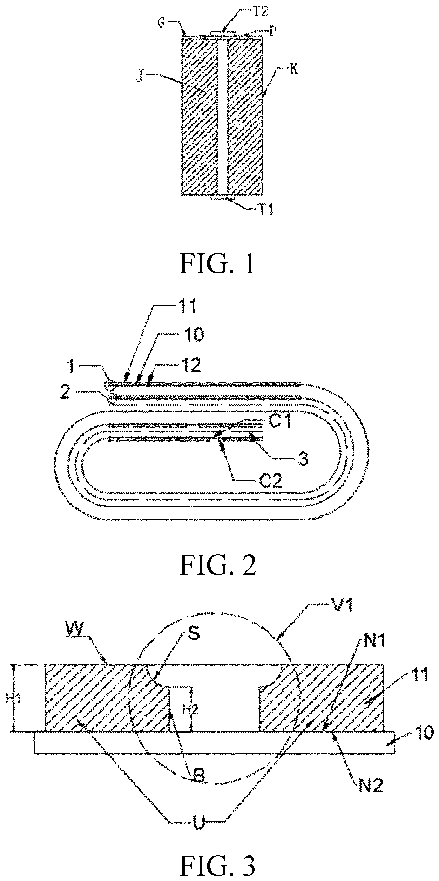

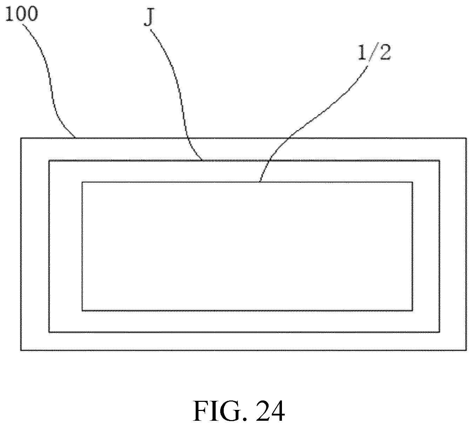

Referring to Figs. 1 and 24, an embodiment of the present disclosure provides a battery 100. The battery 100 includes a battery housing K, a wound battery core J accommodated in the battery housing K and a battery upper cover G. The wound battery core J is one provided in the embodiment of the present disclosure, and the specific structure will be described later. The battery housing K can be a cylinder with an open upper end, the inner wall at bottom of the cylinder is electrically connected to a negative electrode current collection sheet of the wound battery core J, a boss T1 is provided at a central position of an outer bottom, to connect a negative electrode of the battery to an external device. The battery upper cover G is a disc-shaped cover that matches the battery housing K, and has a bottom provided with a downwardly protruding plane that is electrically connected to a positive electrode current collection sheet. An insulating sealing ring is mounted between the positive electrode current collection sheet and the battery housing K. A cylindrical boss T2 protruding upward is provided at a central position on a top of the battery upper cover, to connect a positive electrode of the battery to an external device. The battery upper cover G is provided with an electrolyte injection port D. The transmission of electrons between the positive and negative electrodes is achieved by injecting an electrolyte. After the electrolyte is injected, the electrolyte injection port is sealed with a sealing pin. The battery 100 with such a structure has less heat generation during the charge and discharge process, and low attenuation rate during cycles, allowing the battery 100 to have a long service life. By using the wound battery core J provided in the present disclosure, the wrinkling of the electrode sheet is reduced or even no wrinkling occurs. This reduces the resistance of the battery 100, enables low heat generation of the battery 100, reduces the occurrence of exposed current collector caused by the falling off of the active material layer from the electrode sheet, and extends the service life of the battery 100.

Referring to Fig. 2, an embodiment of the present disclosure provides a wound battery core J. The wound battery core J includes a separator 3 and an electrode sheet 1 and an electrode sheet 2 provided in an embodiment of the present disclosure. The electrode sheet 1 and the electrode sheet 2 can be a positive electrode sheet and a negative electrode sheet. The separator 3 is usually a polymer material with nano-scale pores, and provided between the electrode sheet 1 and the electrode sheet 2 to separate the two electrode sheets from each other, so as to avoid the short circuit problem caused by the contact between the positive and negative electrodes, and permit the electrolyte ions to pass through. The electrode sheet 1, the separator 3 and the electrode sheet 2 are stacked, and then wound by a special winding machine into the wound battery core J. By using the electrode sheet provided in the present disclosure, the wrinkling of the electrode sheet is reduced or even no wrinkling occurs. As a result, the falling off of the active material layer from the electrode sheet is reduced, and the attenuation rate of the battery core during cycles is lowered,

Referring to Fig. 3, an embodiment of the present disclosure provides an electrode sheet, which includes a current collector 10 and a first active material layer 11 coated on a surface of the current collector 10. The current collector 10 is usually an aluminum foil or a copper foil, and the first active material layer 11 mainly includes an active material, a conductive agent, a binder, and other ingredients. The first active material layer 11 includes a main portion U and a first buffer portion V1 connected to each other. The main portion U includes a first inner surface N1 and an outer surface W opposite to each other. The first inner surface N1 is attached to the current collector 10, and the outer surface W is parallel to the first inner surface N1, where a vertical distance from the outer surface W to the first inner surface N1 is the first thickness H1; and the first thickness H1 is defined in the range of 50 to 200 µm.

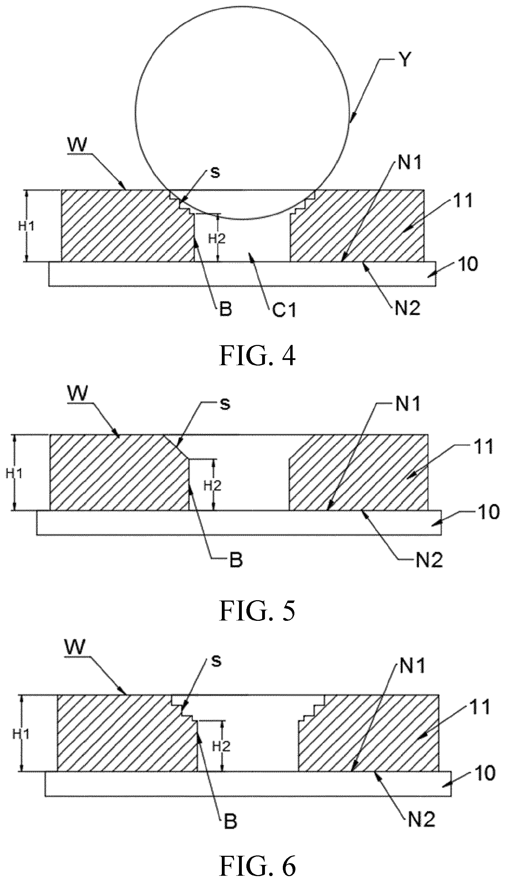

Referring to Figs. 3 and 4, the first buffer portion V1 is provided with a first groove C1. The first buffer portion V1 includes a second inner surface N2, a buffer surface S and an inner wall surface B defining the first groove C1. The second inner surface N2 coincides with the first inner surface N1. One end of the buffer surface S is connected to the outer surface W, and another end of the buffer surface S is connected to the inner wall surface B. A vertical distance from the intersection line where the buffer surface S and the inner wall surface B are connected to the second inner surface N2 is the second thickness H2. The second thickness H2 is smaller than the first thickness H1. The second thickness is defined in the range of 20 to 180 µm.

By setting the buffer surface S, when the electrode sheet passes through a roller Y, the pressure on the first buffer portion V1 is reduced in the rolling process, whereby the pressure transferred by the first buffer portion V1 to the current collector 10 is lowered, and the extension of the current collector 10 decreases, thereby reducing or even eliminating the wrinkling of the current collector 10. The reduction of the wrinkling of the current collector 10 reduces the risk of foil exposure caused by peeling off of the active material, thus improving the cycle life of the battery, and slowing down the heat generation of the battery 100.

In an embodiment, referring to Fig. 3, the first buffer portion V1 and the main portion U have an integral structure made by an integral molding process. The process is process, and the structure is easy to fabricate. In other embodiments, the first buffer portion V1 and main portion U may also be fabricated separately and then connected together.

In an embodiment, referring to Figs. 3 and 4, the buffer surface S between the outer surface W and the inner wall surface B is a curved surface. During the rolling process, the roller Y transitions from the outer surface W through the buffer surface S to the inner wall surface B of the current collector 10. The pressure decreases when it reaches the periphery of the first groove C1, so the pressure applied on the current collector 10 is reduced, the extension decreases accordingly, and the wrinkling is alleviated.

In another embodiment, referring to Figs. 4 and 5, the buffer surface S between the outer surface W and the inner wall surface B is an inclined surface. By arranging the buffer surface S to be an inclined surface, the contact area between the roller Y and the first buffer portion V1 is allowed to change uniformly and the pressure applied on the current collector 10 also varies uniformly during the rolling process, thus further reducing the tendency of wrinkling of the current collector 10.

In another embodiment, referring to Figs. 4 and 6, the buffer surface S between the outer surface W and the inner wall surface B is a stepped surface. By means of the buffering effect of the buffer surface S, the pressure applied on the current collector 10 decreases when the roller Y passes through the first buffer portion V1, and the extension of the current collector 10 decreases accordingly, to achieve the purpose of reducing the occurrence of wrinkling.

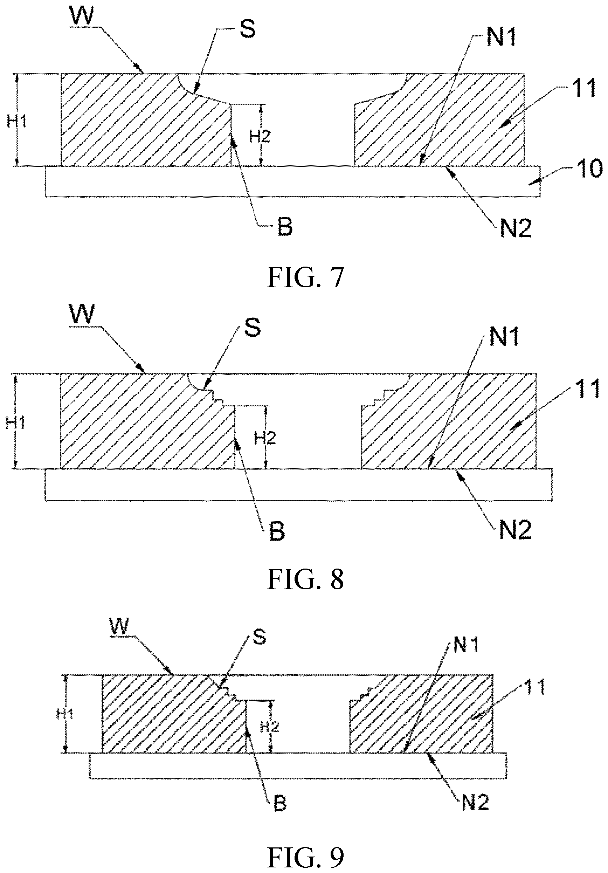

In another embodiment, referring to Fig. 7, the buffer surface S between the outer surface W and the inner wall surface B is a curved surface and an inclined surface in combination.

In another embodiment, referring to Fig. 8, the buffer surface S between the outer surface W and the inner wall surface B is a curved surface and a stepped surface in combination.

In another embodiment, referring to Fig. 9, the buffer surface S between the outer surface W and the inner wall surface B is an inclined surface and a stepped surface in combination.

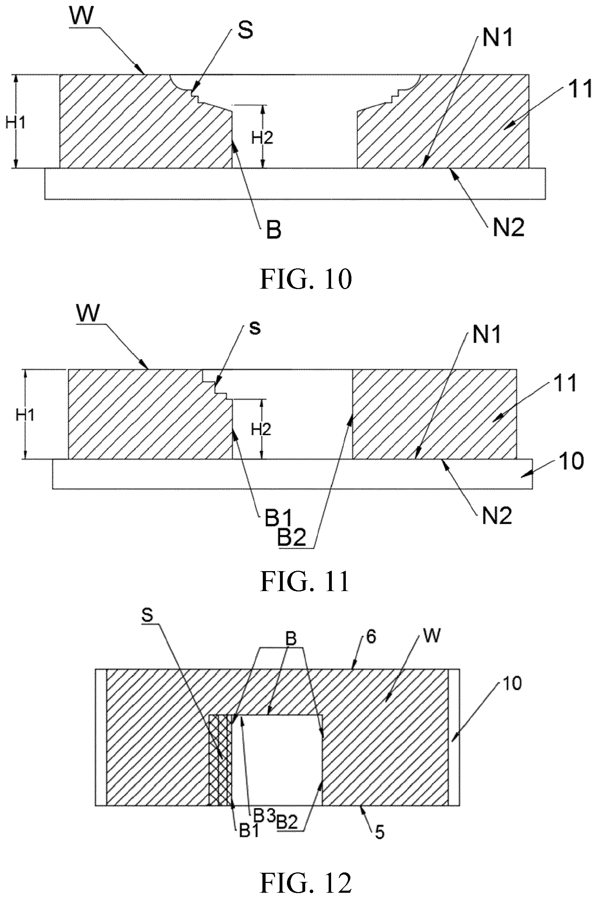

In another embodiment, referring to Fig. 10, the buffer surface S between the outer surface W and the inner wall surface B is a curved surface, an inclined surface and a stepped surface in combination. By arranging the buffer surface S to be a combination of different types of surfaces, a better buffering effect is achieved, thus achieving a better effect of reducing the wrinkling of the current collector 10.

In an embodiment, referring to Fig. 3, a vertical distance from any point on the buffer surface S to the second inner surface N2 is less than the first thickness H1. By defining the height from the entire buffer surface S to the current collector 10 to be lower than that from the outer surface W to the current collector 10, the pressure applied on each portion of the current collector 10 facing the buffer surface S is ensured to be lower, so the surface of the current collector 10 is less wrinkled after rolling.

The inner wall surface B of the first buffer portion V1 includes a first wall surface B1, a second wall surface B2 and a third wall surface B3. The first wall surface B1 is opposite to the second wall surface B2, and the third wall surface B3 connects the first wall surface B1 and the second wall surface B2. The buffer surface S is provided at a corresponding position of at least one of the first wall surface B 1, the second wall surface B2 and the third wall surface B3.

In an embodiment, referring to Figs. 11 and 12, the first wall surface B1 is provided with the buffer surface S, and the second wall surface B2 and the third wall surface B3 do not have a buffer surface. In this embodiment, the buffer surface S is a stepped surface. In other embodiments, the buffer surface S may also be other types of surfaces as described above.

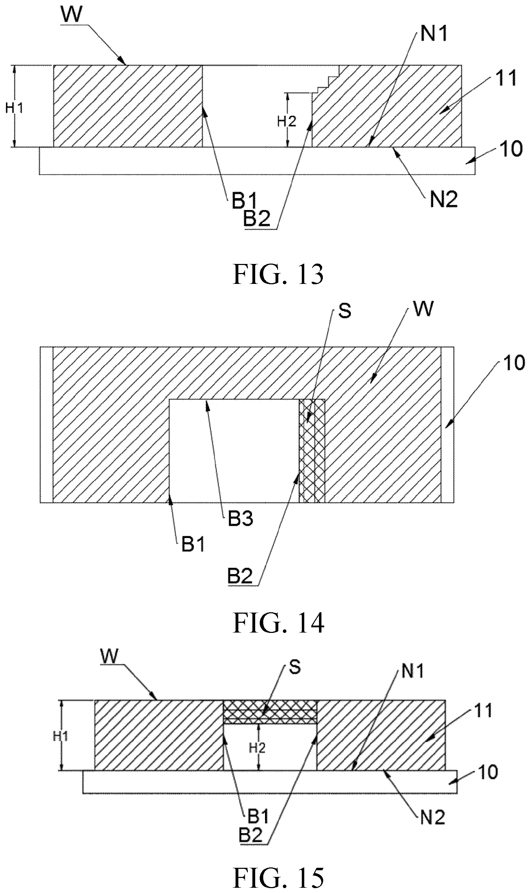

In another embodiment, referring to Figs. 13 and 14, the second wall surface B2 is provided with the buffer surface S, and the first wall surface B1 and the third wall surface B3 do not have a buffer surface. In this embodiment, the buffer surface S is a stepped surface. In other embodiments, the buffer surface S may also be other types of surfaces as described above.

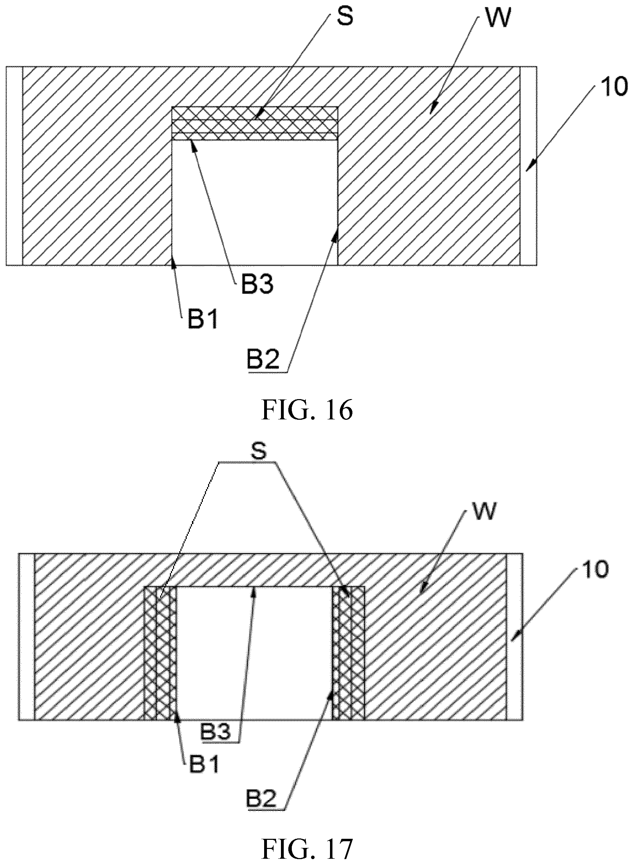

In another embodiment, referring to Figs. 15 and 16, the third wall surface B3 is provided with the buffer surface S, and the first wall surface B1 and the second wall surface B2 do not have a buffer surface. In this embodiment, the buffer surface S is a stepped surface. In other embodiments, the buffer surface S may also be other types of surfaces as described above.

In another embodiment, referring to Fig. 17, the first wall surface B1 and the second wall surface B2 are provided with the buffer surface S, and the third wall surface B3 does not have a buffer surface. In this embodiment, the buffer surface S is a stepped surface. In other embodiments, the buffer surface S may also be other types of surfaces as described above.

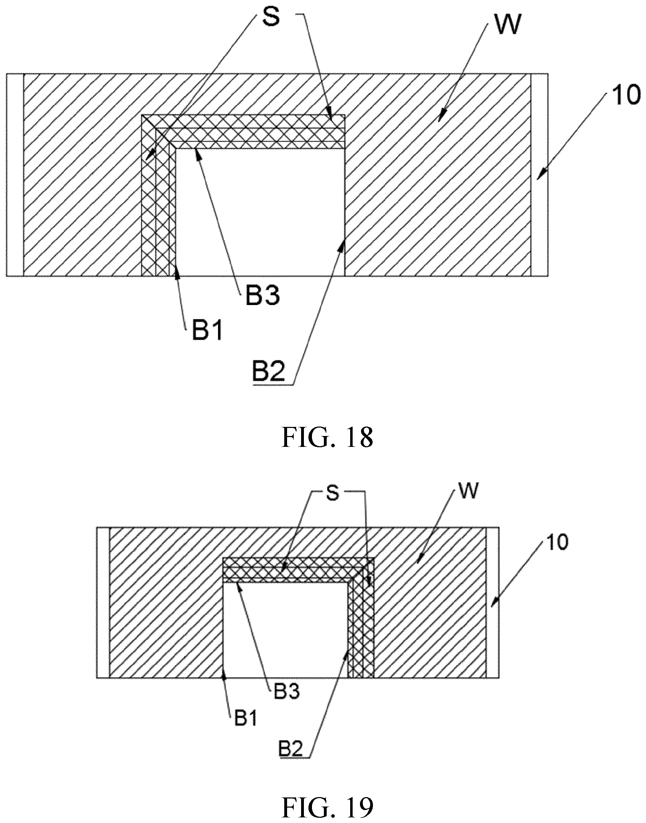

In another embodiment, referring to Fig. 18, the first wall surface B1 and the third wall surface B3 are provided with the buffer surface S, and the second wall surface B2 does not have a buffer surface. In this embodiment, the buffer surface S is a stepped surface. In other embodiments, the buffer surface S may also be other types of surfaces as described above.

In another embodiment, referring to Fig. 19, the second wall surface B2 and the third wall surface B3 are provided with the buffer surface S, and the first wall surface B1 does not have a buffer surface. In this embodiment, the buffer surface S is a stepped surface. In other embodiments, the buffer surface S may also be other types of surfaces as described above.

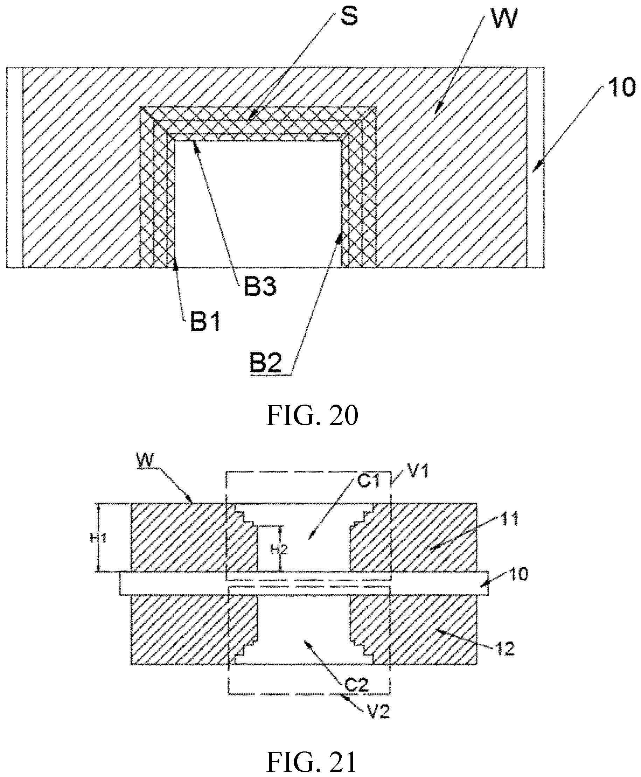

In another embodiment, referring to Fig. 20, the first wall surface B1, the second wall surface B2 and the third wall surface B3 are all provided with the buffer surface S. In this embodiment, the buffer surface S is a stepped surface. In other embodiments, the buffer surface S may also be other types of surfaces as described above. An optimum solution can be obtained by arranging the buffer surface S on a different inner wall surface, to minimize the wrinkling of the current collector 10.

Referring to Fig. 21, the electrode sheet further includes a second active material layer 12. The second active material layer 12 is provided on another side of the current collector 10 facing away from the first active material layer 11. The second active material layer 12 is provided with a second buffer portion V2, and the second buffer portion V2 is provided with a second groove C2. The structure of the second buffer portion V2 is the same as the structure of the first buffer portion V1.

In an embodiment, referring to Fig. 21, the first buffer portion V1 and the second buffer portion V2 are arranged in alignment with each other.

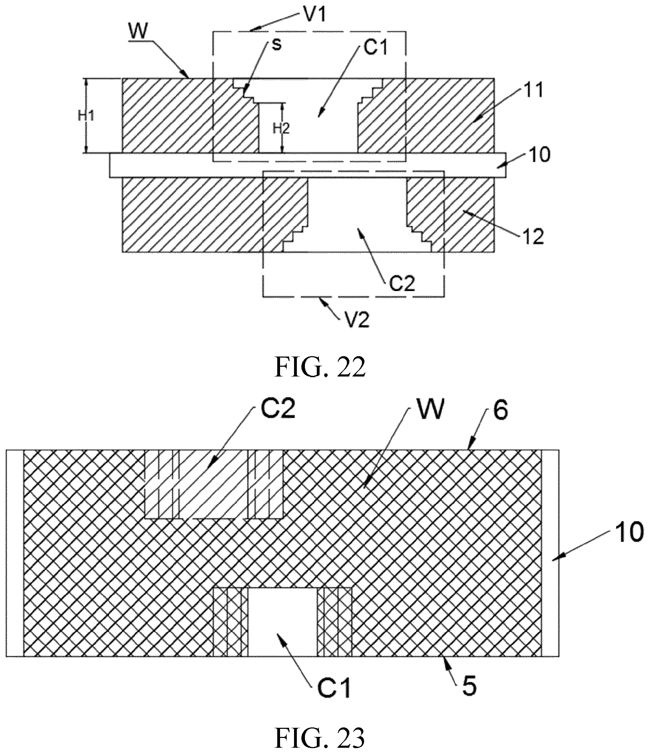

In another embodiment, referring to Fig. 22, the first buffer portion V1 and the second buffer portion V2 are arranged to offset with each other.

Referring to Figs. 12 and 23, the current collector 10 includes opposing first side 5 and second side 6.

In an embodiment, referring to Fig. 12, the first groove C1 extends from the first side 5 toward the second side 6; and similarly, the second groove C2 also extends from the first side 5 toward the second side 6.

In another embodiment, referring to Fig.23, the first groove C1 extends from the first side 5 toward the second side 6; and conversely, the second groove C2 extends from the second side 6 toward the first side 5.

What is disclosed above is merely exemplary embodiments of the present disclosure, and in no way constitutes a limitation on the protection scope of the present disclosure. A person of ordinary skill in the art understands that any complete or partial implementation of the foregoing embodiments and any equivalent variations made based on the claims of the present disclosure still fall within the scope covered by the present disclosure.

## Claims

1. An electrode sheet, comprising a current collector and a first active material layer coated on a surface of the current collector, wherein the first active material layer comprises a main portion and a first buffer portion connected to each other, wherein the main portion comprises a first inner surface and an outer surface opposite to each other, the first inner surface is attached to the current collector, the outer surface is parallel to the first inner surface, and a vertical distance from the outer surface to the first inner surface is the first thickness; and the first buffer portion is provided with a first groove, and the first buffer portion comprises a second inner surface, a buffer surface and an inner wall surface defining the first groove, the second inner surface coincides with the first inner surface, one end of the buffer surface is connected to the outer surface, and another end of the buffer surface is connected to the inner wall surface, a vertical distance from the intersection line where the buffer surface and the inner wall surface are connected to the second inner surface is the second thickness, the second thickness is smaller than the first thickness.

2. The electrode sheet according to claim 1, wherein the buffer surface comprises any one of a curved surface, an inclined surface, a stepped surface, a curved surface and an inclined surface in combination, a curved surface and a stepped surface in combination, an inclined surface and a stepped surface in combination, and a curved surface, a stepped surface, and an inclined surface in combination.

3. The electrode sheet according to claim 2, wherein a vertical distance from any point on the buffer surface to the second inner surface is less than the first thickness.

4. The electrode sheet according to any one of claims 1 to 3, wherein the inner wall surface of the first buffer portion comprises a first wall surface, a second wall surface and a third wall surface, wherein the first wall surface is opposite to the second wall surface, and the third wall surface connects the first wall surface and the second wall surface; and the buffer surface is provided at a corresponding position of at least one of the first wall surface, the second wall surface and the third wall surface.

5. The electrode sheet according to any one of claims 1 to 4, wherein the first buffer portion and the main portion have an integral structure.

6. The electrode sheet according to any one of claims 1 to 5, further comprising a second active material layer, provided on another side of the current collector facing away from the first active material layer, wherein the second active material layer is provided with a second buffer portion, the second buffer portion is provided with a second groove, and the structure of the second buffer portion is the same as the structure of the first buffer portion.

7. The electrode sheet according to claim 6, wherein the first buffer portion and the second buffer portion are arranged in alignment or offset with each other.

8. The electrode sheet according to claim 6, wherein the current collector comprises opposing first and second sides, wherein the first groove extends from the first side toward the second side; the second groove extends from the first side toward the second side, or the second groove extends from the second side toward the first side.

9. A wound battery core, comprising a separator and an electrode sheet according to any one of claims 1 to 8, wherein the separator is arranged between two electrode sheets.

10. A battery, comprising a wound battery core according to claim 9.
